# EUROPEAN PATENT APPLICATION

(11) **EP 3 587 359 A1**
(43) Date of publication of application: **01.01.2020**
(21) Application number: 17898264.1
(22) Date of filing: 14.09.2017
(51) Int. Cl.: C02F 1/56, B01D 21/01, B05D 1/02, C02F 1/52

(54) **TREATMENT AGENT FOR WET COATING-BOOTH CIRCULATING WATER**

(30) Priority: 24.02.2017 JP 2017033357
(71) Applicant: Kurita Water Industries Ltd., Tokyo 164-0001 (JP)
(72) Inventor: YOSHIDA, Tsuneyuki, Tokyo 164-0001 (JP)
(74) Representative: Müller-Boré & Partner Patentanwälte PartG mbB
(86) International application number: PCT/JP2017/033233
(87) International publication number: WO 2018/154822

(57) **Abstract**

A method for treating a wet-painting booth circulation water, comprising, into somewhere along a path for a wet-painting booth circulation water supplied from a water tank to a painting booth for collecting an unapplied paint and then returned to the water tank, adding a treatment agent to a wet-painting booth circulation water so as to detackify the unapplied paint collected in the circulation water, wherein the treatment agent comprises a cellulose acetate solution.

## Description

### TECHNICAL FIELD

The present invention relates to a treatment agent for a wet-painting booth circulation water. More particularly, the present invention relates to a treatment agent for a wet-painting booth circulation water that can decrease the tackiness of an unapplied paint collected in the wet-painting booth circulation water, to prevent the unapplied paint from adhering and fixing on an inner wall of a water path and others.

### BACKGROUND ART

A painting booth is a production facility necessary in painting work configured in order to discharge a spray mist. The painting booth requires a function of suitably discharging an organic solvent produced during spraying work outdoors, a function of effectively capturing an unapplied paint produced due to overspray, a function of producing suitable suction wind speed for preventing adhesion of dust and the like to a painted object for painting quality improvement and maintaining a hygienic environment for the human body, and others. In a wet-painting booth, an unapplied paint is collected with a circulation water. The unapplied paint to be collected in the circulation water has high tackiness and therefore may adhere to water screen plate, pipe system, spray nozzle, and the like in the painting booth to cause clogging to decrease water washing efficiency. In order to solve such problems, proposed is adding various treatment agents to the circulation water.

For example, PTL1 discloses a detackifier comprising a cationized starch solution, a polybasic aluminum salt such as chlorohydroxyaluminum, polyaluminum chloride, or polyaluminum nitrate, and a polymer flocculant such as polyacrylamide.

PTL2 discloses a treatment agent for an aqueous paint mist comprising at least one of cationic polymers composed of cationic cellulose, polyglucosamine, and cationic polyvinyl alcohol.

PTL3 discloses a chemical composition for water treatment comprising a clay mineral comprising montmorillonite as a main component, and a polymer compound having at least one of a quaternary ammonium group and an amino group, such as cationized cellulose.

PTL4 and PTL5 show that adding of bentonite having particular high swelling power, and a slight amount of a polyethylenimine, or sodium alginate and/or a sodium salt of carboxymethyl cellulose to a wet-painting booth circulation water results in attainment of detackifying a redundant paint to make a paint sludge being high in floating property and dispersibility, and growing in separation and recovery properties.

### CITATION LIST

### PATENT LITERATURE

PTL 1: JP 2012-531301 A
PTL 2: JP H06-114210 A
PTL 3: JP H10-76277 A
PTL 4: JP 2015-33689 A
PTL 5: JP 2016-22435 A

### SUMMARY OF THE INVENTION

### PROBLEMS TO BE SOLVED BY THE INVENTION

An object of the present invention is to provide a treatment agent for a wet-painting booth circulation water that can decrease the tackiness of an unapplied paint collected in the wet-painting booth circulation water, to prevent the unapplied paint from adhering and fixing on an inner wall of a water path, and the like.

### MEANS FOR SOLVING THE PROBLEMS

Researches for achieving the above object have resulted in completion of the present invention including the following embodiments.
[1] A treatment agent for wet-painting booth circulation water, comprising a fine powder comprising cellulose acetate.
[2] A treatment agent for wet-painting booth circulation water, comprising a solution comprising cellulose acetate.
[3] A method for treating wet-painting booth circulation water, comprising:
   in somewhere along a path for a wet-painting booth circulation water supplied from a water tank to a painting booth for collecting an unapplied paint and then returned to the water tank,
   adding the treatment agent according to any one of [1] or [2] to the circulation water to detackify the unapplied paint collected in the circulation water.
[4] The method for treating wet-painting booth circulation water according to [3], further comprising adding a coagulant to the circulation water.
[5] The method for treating wet-painting booth circulation water according to [3] or [4], further comprising adding a polymer flocculant to the circulation water.

### ADVANTAGEOUS EFFECTS OF THE INVENTION

When the wet-painting booth circulation water treatment agent of the present invention, comprising a fine powder comprising cellulose acetate or a solution comprising cellulose acetate, is added to a circulation water, the cellulose acetate disperses finely and uniformly in the circulation water to form a colloid. The colloid of cellulose acetate has extremely low polarity and therefore has strong hydrophobicity and high affinity for an unapplied hydrophobic paint. A phenolic resin known as conventional art for detackifying an unapplied paint (see JP 2016-52639 A and the like) has some polarity (anion character), and therefore a cationic additive is often used in combination therewith in order to promote detackifying. The treatment agent of the present invention has extremely low polarity, and therefore the detackifying of an unapplied paint can be achieved without requiring the combined use of another additive.

According to the treatment agent according to the present invention, even in a low amount added, the tackiness of an unapplied paint collected in wet-painting booth circulation water can be decreased to effectively prevent the unapplied paint from adhering and fixing on an inner wall of a water path, and the like, and the corrosion of a facility is less likely to be caused.

The detailed function effect of detackifying by means of the treatment agent according to the present invention are not clear but are presumed as follows. The solubility of cellulose acetate in water is low. When the treatment agent comprising the solution comprising cellulose acetate that is one embodiment of the present invention is added to water, the cellulose acetate precipitates. The precipitated cellulose acetate forms a fine colloid. It is considered that this colloid adheres to the surfaces of unapplied paint droplets and detackifies the unapplied paint. It is considered that this phenomenon and action also occur in the treatment agent comprising the fine powder comprising cellulose acetate that is another embodiment of the present invention.

### BRIEF DESCRIPTION OF THE DRAWINGS

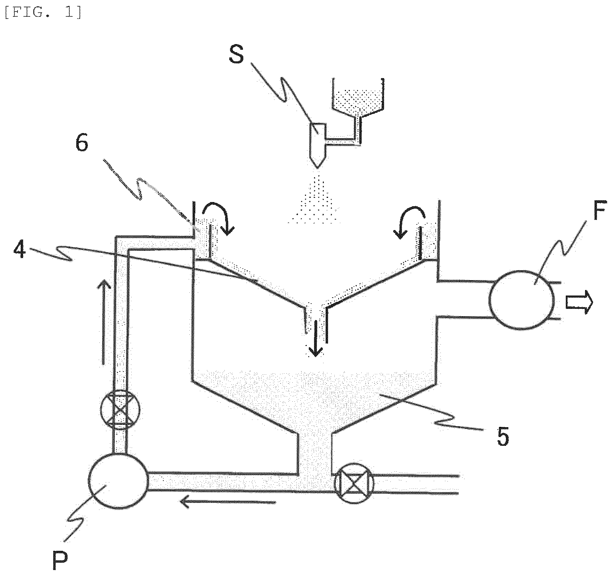

Fig. 1 is a conceptual diagram showing an example of a wet-painting booth configuration.

### EMBODIMENTS FOR CARRYING OUT THE INVENTION

A wet-painting booth circulation water treatment agent according to the present invention comprises a fine powder comprising cellulose acetate or a solution comprising cellulose acetate.

Cellulose acetate is a semisynthetic polymer obtained by subjecting cellulose, a natural polymer, to acetic acid esterification. Cellulose is a polymer comprising a repeating unit derived from anhydroglucose and having three hydroxyl groups per repeating unit. By acetylating these hydroxyl groups, cellulose acetate is obtained. The properties of cellulose acetate can be modulated by the extent of acetylation (degree of acetification) and molecular weight. Typical examples of cellulose acetate can include diacetyl cellulose and triacetyl cellulose.

The cellulose acetate used for the wet-painting booth circulation water treatment agent of the present invention has an average acetification degree of preferably 45 to 62%, more preferably 50 to 60%, and further preferably 52 to 58%.

The average acetification degree of cellulose acetate can be measured by a method described in ASTM-D-817-91 (test methods of cellulose acetate and the like). It can also be measured by NMR according to the method of Tezuka (Tezuka, Carbonydr. Res. 273, 83 (1995)). In other words, free hydroxyl groups of a cellulose acetate sample are converted into propionyl groups in pyridine with propionic anhydride. The obtained sample is dissolved in deuterated chloroform, and the carbon-13 spectrum is measured. The carbon signals of the acetyl group appear in the region from 169 ppm to 171 ppm in the order of positions 2, 3, and 6 from the higher magnetic field, and the signals of the carbonyl carbon of the propionyl group appear in the region from 172 ppm to 174 ppm in the same order. From the abundance ratios of acetyl and propionyl at respective corresponding positions, the degree of acetification of the original cellulose acetate can be calculated.

The cellulose acetate used for the wet-painting booth circulation water treatment agent of the present invention has a weight average molecular weight of preferably 500 to 100000, more preferably 10000 to 60000, and further preferably 10000 to 40000. The effect tends to decrease as the weight average molecular weight decreases. As the weight average molecular weight increases, the solution viscosity tends to increase and therefore the product concentration tends to be difficult to increase from the viewpoint of handleability. When the product concentration is considered, the weight average molecular weight is preferably about 10000 to 20000. The weight average molecular weight is determined by converting a value measured by gel permeation chromatography into the molecular weight of standard polymethyl methacrylate.

A solvent is not particularly limited as long as cellulose acetate can be dissolved in it to form the solution. Examples of the solvent can include ketones such as acetone, methyl ethyl ketone, cyclohexanone, and diacetone alcohol; esters such as methyl formate, methyl acetate, ethyl acetate, and ethyl lactate; nitromethane, acetonitrile, N-methylpyrrolidone, dimethylformamide; glycols such as methyl glycol and methyl glycol acetate; ethers such as tetrahydrofuran, dioxane, and dioxolane; halogenated hydrocarbons such as methylene chloride, chloroform, and tetrachloroethane; and dimethyl sulfoxide and propylene carbonate. Among these, solvents having no volatility and safe are preferred.

A solution viscosity of the wet-painting booth circulation water treatment agent of the present invention is preferably low, from the viewpoint of handleability, as long as the desired detackifying effect is obtained. The solution viscosity of the wet-painting booth circulation water treatment agent of the present invention is preferably 10 to 1000 mPa·s, more preferably 10 to 300 mPa·s. The solution viscosity can be modulated by appropriately selecting the concentration of cellulose acetate, the average molecular weight of cellulose acetate, and the like. The concentration of cellulose acetate is preferably 1 to 10% by mass, more preferably 2 to 8% by mass, and further preferably 3 to 7% by mass.

The wet-painting booth to which the wet-painting booth circulation water treatment agent of the present invention can be applied is not particularly limited in its type and may be a dispersion type or a floating type.

In somewhere along a path for wet-painting booth circulation water supplied from a water tank to a painting booth for collecting an unapplied paint, and then returned to the water tank, the wet-painting booth circulation water treatment agent according to the present invention is added to the circulation water. An additive amount of the wet-painting booth circulation water treatment agent according to the present invention can be appropriately adjusted according to the state of the detackifying of the unapplied paint.

The wet-painting booth circulation water treatment agent according to the present invention adheres to the unapplied paint, detackifies it, and is discharged out of the system together with paint sludge in a sludge separation step, and therefore is preferably appropriately added in an amount corresponding to this.

A coagulant is preferably added to the circulation water together with the wet-painting booth circulation water treatment agent according to the present invention. The coagulant has the action of neutralizing the charge of fine particles in water for coagulation. Coagulants are classified roughly into organic coagulants and inorganic coagulants.

Examples of the organic coagulants can include sodium alginate; chitin-chitosan coagulants; biocoagulants such as strains TKF04 and BF04; and cationic polymer coagulants such as polyethylenimine, cationic-modified polyacrylamide, polyamines, polyamine sulfones, polyamides, polyalkylenepolyamines, amine crosslinked polycondensates, poly(dimethylaminoethyl acrylate), dimethyldiallylammonium chloride, condensates of alkylamine and epichlorohydrin, condensates of alkylene dichloride and polyalkylenepolyamine, a condensate of dicyandiamide and formalin, and DAM (homopolymers or copolymers of dimethylaminoethyl methacrylate). The cationic polymer coagulants comprise, for example, cationic polymers having a weight average molecular weight of preferably one thousand or more and one million or less, more preferably five thousand or more and 300 thousand or less.

Examples of the inorganic coagulants can include aluminum coagulants such as aluminum sulfate (aluminium sulphate), polyaluminum chloride (PAC), polyaluminum hydroxychloride, and pseudoboehmite alumina sols (AlO(OH)); iron salt coagulants such as ferrous hydroxide, ferrous sulfate, ferric chloride, polyferric sulfate, and iron-silica inorganic polymer coagulants; zinc coagulants such as zinc chloride; and active silica and polysilica iron coagulants.

An amount of the coagulant added to the circulation water can be appropriately adjusted according to the state of the formation of coagulated flocs of the unapplied paint. The amount of the coagulant added to the circulation water is preferably 0.01 to 30 parts by mass, more preferably 0.5 to 20 parts by mass, per 100 parts by mass of the cellulose acetate.

When a cationic polymer coagulant is used, the amount of the cationic polymer coagulant added is, for example, preferably 0.01 to 20 parts by mass, more preferably 0.5 to 10 parts by mass, per 100 parts by mass of the cellulose acetate. The amount of the cationic polymer coagulant added is, for example, preferably 0.001 to 1 meq/L, more preferably 0.002 to 0.5 meq/L, as a colloid equivalent value based on the circulation water.

When an inorganic coagulant is used, the amount of the inorganic coagulant added is preferably 0.01 to 100 parts by mass, more preferably 1 to 50 parts by mass, in terms of a metal oxide per 100 parts by mass of the cellulose acetate.

The coagulated flocs of the unapplied paint obtained by the action of the coagulant are preferably flocculated to form coarse flocs, from the viewpoint of facilitating sedimentation and centrifugation.

In the present invention, a polymer flocculant can be further added to the circulation water for the formation of coarse flocs. The polymer flocculant comprises an anionic, cationic, or amphoteric polymer. The polymer has a weight average molecular weight of usually more than one million, preferably not less than five million.

Examples of the polymer flocculant comprising the anionic polymer can include sodium polyacrylate, sodium polyacrylate-amide derivatives, polyacrylamide partial hydrolysates, partially sulfomethylated polyacrylamide, and poly(2-acrylamido)-2-methylpropane sulfate.

Examples of the polymer flocculant comprising the cationic polymer can include polyaminoalkyl acrylates, polyaminoalkyl methacrylates, polyethylenimine, polydiallylammonium halides, chitosan, and urea-formalin resins.

Examples of the polymer flocculant comprising the amphoteric polymer can include copolymers of acrylamide, aminoalkyl methacrylates and sodium acrylate.

An amount of the polymer flocculant added can be appropriately adjusted according to the state of the formation of the coarse flocs. The amount of the polymer flocculant added is, for example, preferably 0.01 to 20 parts by mass, more preferably 0.5 to 10 parts by mass, per 100 parts by mass of the cellulose acetate. The amount of the polymer flocculant added is, for example, preferably 0.001 to 1 meq/L, more preferably 0.002 to 0.5 meq/L, as a colloid equivalent value based on the circulation water.

Additional detackifying agent can be added to the circulation water together with the wet-painting booth circulation water treatment agent according to the present invention. Examples of the additional detackifying agent can include alumina sols, sepiolite, melamine formaldehyde resins, phenol formaldehyde resins, bentonite, hectorite, linear cationic polyamines, and sodium zincate.

The coagulated flocs or the coarse flocs formed by the above method are separated and removed from the circulation water by a known method. In this manner, water circulation through the wet-painting booth can be clarified.

### EXAMPLES

Next, the present invention will be more specifically described by giving an Example and Comparative Examples. However, the following Example only shows one embodiment of the present invention, and the present invention is not limited to the following Example.

### Example 1

In 98.4 g of acetone, 1.6 g of cellulose acetate having a degree of acetification of about 55%, a degree of substitution of about 2.4, an acetyl group content of about 39%, an average degree of polymerization of about 150, and a weight average molecular weight of about 40000 was dissolved to obtain a cellulose acetate solution.

In a 50 ml glass bottle, 30 ml of tap water and 0.3 ml of the cellulose acetate solution were placed. And the glass bottle was capped and shaken to make a cellulose acetate colloidal dispersion.

In there, 0.1 ml of a solvent paint (UV paint) was delivered by drops, and the glass bottle was capped and shaken 60 times per 30 seconds.

The glass bottle was observed with the naked eye to assess the status of the paint adhesion to the glass bottle.

The turbidity "NTU" (Nephelometric Turbidity Unit) of the liquid in the glass bottle was measured as follows. "NTU" (Nephelometric Turbidity Unit) was determined with a tungsten lamp having a color temperature of 2200 to 3000 K, using an absorption cell in which the total of the optical path lengths of incident light and scattered light was 10 cm or less, under the conditions that the acceptance angle for incident light was 90 ± 30°, and the peak of the sensitivity characteristics of the photoelectric conversion system was 400 to 600 nm, and using formazine as a turbidity standard liquid.

The results are shown in Table 1. The paint did not adhere to the bottle but floated on the water. The turbidity was extremely low, 16 NTU.

### Comparative Example 1

A phenolic resin solution was obtained by dissolving 1.6 g of a phenolic resin (KPKG10; manufactured by Gun Ei Chemical Industry Co., Ltd.) in 98.4 g of acetone. The status of the adhesion to the glass bottle was assessed and then the turbidity was measured in the same manner as Example 1 except that the phenolic resin solution was used instead of the cellulose acetate solution.

The results are shown in Table 1. The paint adhered to the bottle, some of the paint dissolved in the water, and the turbidity was high.

### Comparative Example 2

The status of the adhesion to the glass bottle was assessed and then the turbidity was measured in the same manner as Example 1 except that the cellulose acetate solution was not added to the tap water.

The results are shown in Table 1. The paint adhered to the bottle, some of the paint dissolved in the water, and the turbidity was high.

### [Table 1]

**Table 1**

| | Paint Adhesion | Turbidity [NTU] |
|---|---|---|
| Ex. 1 | No | 16 |
| Comp.Ex.1 | Yes | 122 |
| Comp.Ex.2 | Yes,Much | 100 |

### EXPLANATION OF SYMBOLS

- S:: paint spray
- F:: exhaust fan
- P:: circulation water pump
- 4:: water screen plate
- 5:: water tank
- 6:: treatment agent supply portion

## Claims

1. A treatment agent for wet-painting booth circulation water, comprising
a fine powder comprising cellulose acetate.

2. A treatment agent for wet-painting booth circulation water, comprising
a solution comprising cellulose acetate.

3. A method for treating wet-painting booth circulation water, comprising
into somewhere along a path for a wet-painting booth circulation water supplied from a water tank to a painting booth for collecting an unapplied paint and then returned to the water tank,
adding the treatment agent according to claim 1 or 2 to the circulation water to detackify the unapplied paint collected in the circulation water.

4. The method for treating wet-painting booth circulation water according to claim 3, further comprising adding a coagulant to the circulation water.

5. The method for treating wet-painting booth circulation water according to claim 3 or 4, further comprising adding a polymer flocculant to the circulation water.
